# EUROPÄISCHE PATENTSCHRIFT

(11) **EP 3 021 475 B1**
(45) Veröffentlichungstag und Bekanntmachung des Hinweises auf die Patenterteilung: **07.10.2020**
(21) Anmeldenummer: 14192950.5
(22) Anmeldetag: 13.11.2014
(51) Int. Cl.: H02M 7/797

(54) **Bidirektionale Stromrichterschaltungsanordnung mit Potentialtrennung und Verfahren zum Betreiben der bidirektionalen Stromrichterschaltungsanordnung**
Bidirectional power converter assembly with potential separation and method for operating the bidirectional power converter circuit
Circuit bidirectionnel de convertisseur ayant une séparation de potentiel et procédé de fonctionnement d'un circuit bidirectionnel de convertisseur

(43) Veröffentlichungstag der Anmeldung: 18.05.2016
(73) Patentinhaber: AEG Power Solutions GmbH, 59581 Warstein-Belecke (DE)
(72) Erfinder: Cao, Zhiyu, 33100 Paderborn (DE)
(74) Vertreter: Graefe, Jörg

(56) Entgegenhaltungen:
- WO-A1-2014/020898
- CN-A- 102 075 109
- CN-U- 202 406 057
- US-A1- 2009 251 938
- US-A1- 2010 067 272
- US-A1- 2011 128 759
- US-A1- 2014 103 860

## Beschreibung

Die vorliegende Erfindung betrifft eine Stromrichterschaltungsanordnung mit Potentialtrennung,
- mit einem ersten Ein- und Ausgang,
- mit einem zweiten Ein- und Ausgang und
- mit einem bidirektionalen Stromrichter, mit einem Wechselstromeingang und -ausgang und einem Gleichstromeingang und -ausgang,
- wobei der Gleichstromeingang und -ausgang des bidirektionalen Stromrichters mit dem zweiten Ein- und Ausgang der Stromrichterschaltungsanordnung verbunden sind,
- mit einer Glättungsdrossel in Reihe zum zweiten Ein- und Ausgang oder mit einem Glättungskondensator parallel zum zweiten Ein- und Ausgang und einer Glättungsdrossel in Reihe zu der Parallelschaltung aus dem Glättungskondensator und dem zweiten Ein- und Ausgang,
- mit einem Direktumrichter,
- mit einem Transformator und
- wobei ein erster Ein- und Ausgang des Direktumrichters mit dem ersten Ein- und Ausgang der Stromrichterschaltungsanordnung verbunden ist,
- wobei ein zweiter Ein- und Ausgang des Direktumrichters mit einer Primärseite des Transformators verbunden ist,
- wobei eine Sekundärseite des Transformators mit dem Wechselstromeingang und -ausgang des bidirektionalen Stromrichters verbunden ist.

Eine Stromrichterschaltungsanordnung mit einem bidirektionalen Stromrichter zum Wandeln von Wechselstrom, insbesondere Mehrphasenwechselstrom, zum Beispiel Dreiphasenwechselstrom in Gleichstrom und umgekehrt und mit einem Transformator für eine Potentialtrennung ist aus den Dokumenten CN 102 075 109 A, US 2011/128759 A1 oder CN 202 406 057 U bekannt.

Mit der Glättungsdrossel bzw. der Glättungsdrossel und dem Glättungskondensator einer solchen Stromrichterschaltung kann die Welligkeit des Stroms bzw. der Spannung am Ausgang geglättet werden.

Die Stromrichterschaltungsanordnung weist einen Stromsensor zum Erfassen eines Drosselstroms durch die Glättungsdrossel auf. Der gemessene Drosselstrom wird zum Zwecke einer Regelung erfasst.

Bei einer solchen Stromrichterschaltung kann in einem Gleichrichterbetrieb das Problem entstehen, dass durch Kommutierungen einige Stromrichterventile des bidirektionalen Stromrichters erheblichen Belastungen ausgesetzt sind. Außerdem sind relativ große Snubber-Glieder notwendig, um die durch abrupte Stromunterbrechung wegen der Streuinduktivität eines Transformators auftretenden Spannungsspitzen abzufangen.

Die als Snubber-Glieder vorgesehenen RC-Glieder machen einen zusätzlichen Aufwand.

Der Erfindung liegt daher die Aufgabe zugrunde, die Stromrichterschaltungen so zu gestalten, dass Snubber-Glieder deutlich kleiner dimensioniert werden können, ohne dass es zu einer großen Beanspruchung der Stromrichterventile der Stromrichterschaltung kommt.

Diese Aufgabe wird erfindungsgemäß dadurch gelöst, dass die Stromrichterschaltungsanordnung einen Stromsensor zum Erfassen eines Primärstroms durch die Primärseite des Transformators aufweist. Die Stromrichterschaltungsanordnung weist ein Mittel zum Vergleichen des Betrags des Primärstroms durch die Primärseite des Transformators und des Drosselstroms durch die Glättungsdrossel, beide Ströme rechnerisch transformiert auf eine der beiden Seiten des Transformators, auf. Haben beide Ströme den gleichen Betrag, kann dies Schaltvorgänge auslösen, die im Wechselrichterbetrieb von einem Aufladen der Glättungsdrossel zu einem Entladen der Glättungsdrossel führen.

Eine erfindungsgemäße Stromrichterschaltungsanordnung kann eine Steuerung aufweisen. Diese Steuerung kann das Mittel zum Vergleichen der Strombeträge umfassen oder sie kann mit diesem Mittel zum Vergleichen der Strombeträge verbunden sein, so dass das Ergebnis des Vergleiches in die Steuerung eingelesen werden kann. Die Steuerung kann dazu vorgesehen sein, die Schaltzeitpunkte zu ermitteln, zu denen die Stromrichterventile des Direktumrichters und des bidirektionalen Stromrichters umgeschaltet, also leitend geschaltet, oder ausgeschaltet werden. Die Steuerung kann Mittel zur Steuersignalerzeugung aufweisen. Diese können Ausgänge haben, die mit Steueranschlüssen der Stromrichterventile verbunden sind und über welche Steuersignale, die im Mittel zur Steuersignalerzeugung in Abhängigkeit der von der Steuerung ermittelten Schaltzeitpunkte erzeugt werden, zu den Steueranschlüssen der Steuerung übertragen werden. Zwischen den Ausgängen der Steuerung und den Steueranschlüssen der Stromrichterventile können Mittel zur Erzeugung von Zündimpulsen geschaltet werden.

Eine erfindungsgemäße Stromrichterschaltungsanordnung mit Potentialtrennung kann
- bei einem Energietransport vom ersten Ein- und Ausgang der Stromrichterschaltungsanordnung zum zweiten Ein- und Ausgang der Stromrichterschaltungsanordnung als Gleichrichter oder
- bei einem Energietransport vom zweiten Ein- und Ausgang der Stromrichterschaltungsanordnung zum ersten Ein- und Ausgang der Stromrichterschaltungsanordnung als Wechselrichter
betrieben werden.

Dabei kann im Wechselrichterbetrieb die Glättungsdrossel im Wechsel geladen und entladen werden. Vorzugweise wird dann zwischen einem Laden der Glättungsdrossel und einem Entladen der Glättungsdrossel gewechselt, wenn der Strom durch die Glättungsdrossel und der Strom durch die Primärseite des Transformators, beide Ströme rechnerisch transformiert auf eine der beiden Seiten des Transformators, einen gleichen Betrag haben.

Beim Laden der Glättungsdrossel wird Energie, die über den zweiten Ein- und Ausgang aufgenommen wird, in der Glättungsdrossel gespeichert.

Vorzugsweise wird während des Ladens der Glättungsdrossel der Brückenzweig des bidirektionalen Stromrichters kurzgeschlossen. Dazu können wenigstens zwei mit einem gleichen Anschluss der Sekundärwicklung des Transformators verbundene Stromrichterventile oder aber alle Stromrichterventile eingeschaltet werden. Die Glättungsdrossel ist dann parallel zu dem zweiten Ein- und Ausgang geschaltet.

Dagegen wird während des Entladens der Glättungsdrossel ein erstes oder ein zweites Paar, nicht miteinander verbundener Stromrichterventile des bidirektionale Stromrichters leitend geschaltet, wodurch die Glättungsdrossel einen Strom durch die leitend geschalteten Stromrichterventile und durch die Sekundärseite des Transformators treiben kann, der auf der Primärseite einen Primärstrom induziert. Dadurch kann Energie aus der Glättungsdrossel auf die Primärseite übertragen und durch den Primärstrom durch den Direktumrichter zum ersten Ein- und Ausgang übertragen werden.

Während des Ladens der Glättungsdrossel kann der Betrag des Stroms durch die Primärseite des Transformators zunächst abgebaut werden und dann mit anderer Stromrichtung auf den Betrag des Stroms durch die Glättungsdrossel gebracht werden. Dann ist ein guter Zeitpunkt für das Wechseln vom Entladen der Glättungsdrossel zum Laden der Glättungsdrossel erreicht.

Während des Ladens der Glättungsdrossel kann zum Einstellen des Stroms durch die Primärseite des Transformators auf den Betrag des Stroms durch die Glättungsdrossel durch Leitendschalten von Stromrichterventilen des Direktumrichters eine Spannung an die Primärseite angelegt werden, die die gleiche Richtung hat, wie der gewünschte Strom durch die Primärseite des Transformators. Sind die Spannungsrichtung und die Stromrichtung gleich, wirkt der Direktumrichter wie eine Last, die die Energie über den ersten Ein- und Ausgang aufnimmt. Diese Energie wird aber nicht zu dem zweiten Ein- und Ausgang übertragen, sondern in der Streuinduktivität des Transformators gespeichert.

Während des Entladens der Glättungsdrossel kann durch Leitendschalten von Stromrichterventilen des Direktumrichters eine Spannung an die Primärseite des Transformators angelegt werden, die die entgegengesetzte Richtung hat wie der Strom durch die Primärseite des Transformators. Die Primärseite des Transformators wirkt dann wie eine Stromquelle, die elektrische Energie zu dem ersten Ein- und Ausgang transportiert.

Während des Entladens der Glättungsdrossel wird Energie aus der erfindungsgemäßen Schaltungsanordnung in das an den ersten Ein- und Ausgang angeschlossene Wechselstromnetz gespeist. Während des Ladens der Glättungsdrossel wird Energie aus dem an den zweiten Ein- und Ausgang angeschlossenen Netz entnommen. Laden und Entladen der Glättungsdrossel, d.h. Energieentnahme aus dem am zweiten Ein- und Ausgang angeschlossenen Netz und Energieeinspeisung in das am ersten Ein- und Ausgang angeschlossene Netz erfolgen vorzugsweise einmal pro halber Schaltperiode der Wechselspannung an der Primärseite des Transformators. Der Wechsel vom Laden zum Entladen der Glättungsdrossel erfolgt vorzugsweise dann, wenn der Strom durch die Glättungsdrossel und der Strom durch die Primärseite des Transformators, beide Ströme rechnerisch transformiert auf eine der beiden Seiten des Transformators, einen gleichen Betrag haben. Der Wechsel vom Entladen der Drossel zum Laden der Drossel wird dagegen durch die Frequenz der Spannung an der Primärseite des Transformators bestimmt.

Der Direktumrichter kann durch eine B6-Brücke aus bidirektionalen Stromrichterventilschaltern gebildet sein. In einem Brückenzweig der B6-Schaltung kann der zweiten Ein- und Ausgang des Direktumrichters liegen.

Die bidirektionalen Stromrichterventilschalter können aus antiseriell geschalteten Stromrichterventilen, zum Beispiel MOS-FETs oder IGBTs mit antiparalleler Diode aufgebaut sein.

Der bidirektionale Stromrichter der Stromrichterschaltungsanordnung kann im Gleichrichterbetrieb und im Wechselrichterbetrieb betrieben werden. Im Gleichrichterbetrieb wird Energie vom Wechselstromeingang und -ausgang zum Gleichstromeingang und -ausgang übertragen. Im Wechselrichterbetrieb wird Energie vom Gleichstromeingang und -ausgang zum Wechselstromeingang und -ausgang transportiert.

Bei einer erfindungsgemäßen Stromrichterschaltungsanordnung kann der bidirektionale Stromrichter durch eine B2-Brückenschaltung aus Stromrichterventilen, zum Beispiel MOS-FETs oder IGBTs, gebildet sein. Im Gleichrichterbetrieb kann der bidirektionale Stromrichter als Synchrongleichrichter betrieben werden, wenn er aus MOS-FET gebildet ist. Der Gleichstromeingang und -ausgang des bidirektionalen Stromrichters kann in einem Brückenzweig der B2-Schaltung liegen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: ein Ersatzschaltbild einer erfindungsgemäßen Stromrichterschaltungsanordnung,
- Fig. 2a: den Verlauf von Spannungen zwischen Außenleitern und einem Neutralleiter der Stromrichterschaltungsan ordnung (Stern spannungen),
- Fig. 2b: den Verlauf der Beträge der Sternspannungen,
- Fig. 3a: eine vergrößerte Darstellung der Sternspannungen in einem Sektor 3,
- Fig. 3b: eine vergrößerte Darstellung der Beträge der Sternspannungen im Sektor 3,
- Fig. 3c: einen Verlauf einer Spannung UAB an einer Primärseite eines Transformators der Stromrichterschaltungsanordnung über eine Periode im Sektor 3 nebst weiterer elektrischer Größen der bidirektionale Stromrichterschaltungsanordnung
- Fig. 4a1 bis 4a3: Schaltzustände der Stromrichterschaltungsanordnung im Sektor 3 während einer ersten Hälfte einer Periode an der Primärseite des Transformators anliegender Spannung, wobei alle Werte auf Primärseite des Transformators bezogen und mit dem tiefgestellten Buchstabe "p" gezeichnet sind und die auf die Primärseite bezogene Steuerinduktivität mit Lσ bezeichnet ist,
- Fig. 4b1 bis 4b3: Schaltzustände der Stromrichterschaltungsanordnung im Sektor 3 während einer zweiten Hälfte einer Periode an der Primärseite des Transformators anliegender Spannung, wobei alle Werte auf Primärseite des Transformators bezogen und mit dem tiefgestellten Buchstabe "p" gezeichnet sind und die auf die Primärseite bezogene Steuerinduktivität mit Lσ bezeichnet ist,
- Fig. 5: Zeitverläufe der Steuersignale zu den Stromrichterventilschaltern der Stromrichterschaltungsanordnung.

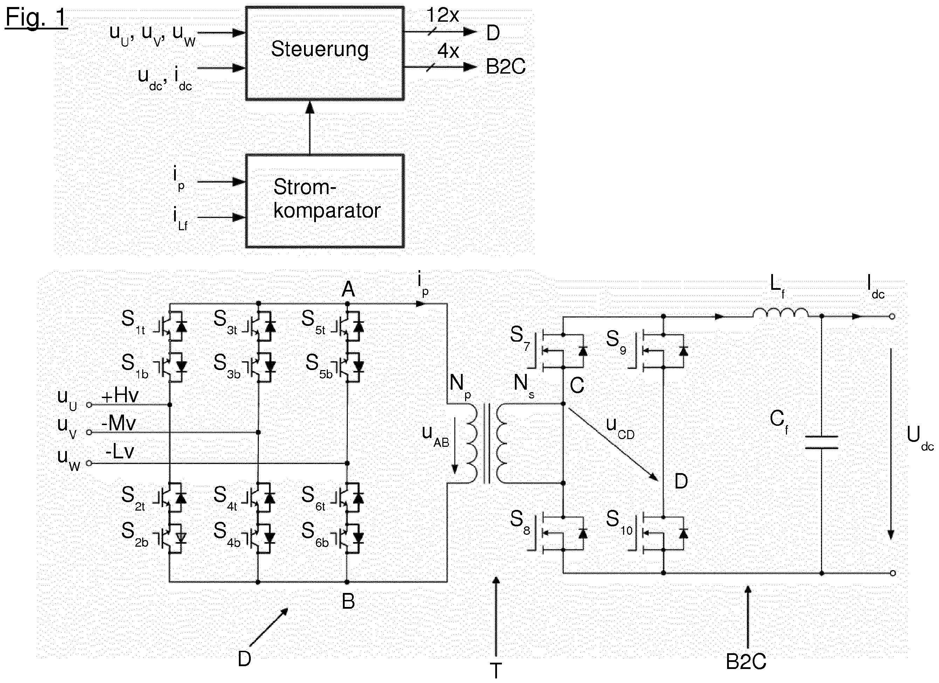

Von der Stromrichterschaltungsanordnung ist in Fig. 1 nur der Leistungsteil dargestellt. Eine Steuerung der Stromrichterschaltungsanordnung ist nicht dargestellt.

Die Stromrichterschaltungsanordnung weist drei Stufen auf. Eine erste Stufe wird durch einen Direktumrichter D, eine zweite Stufe durch einen Transformator T und eine dritte Stufe durch einen bidirektionalen Stromrichter B2C gebildet.

Der Direktumrichter D weist an einem ersten Ein- und Ausgang mit drei Außenleiteranschlüssen uU, uV, uW auf, der zugleich auch einen ersten Ein- und Ausgang der Stromrichterschaltungsanordnung bildet. Er weist ferner einen ersten Anschluss A und einen zweiten Anschluss B auf einer Einphasenwechselstromseite auf, die einen zweiten Ein- und Ausgang des Direktumrichters bilden. Außerdem weist der Direktumrichter D eine Brückenschaltung mit 3 Zweigen und mit einer Steuerung auf. Im übrigen ist sie wie folgt gestaltet:
- Jeder Zweig der Brückenschaltung weist einen ersten bidirektionalen Stromrichterventilschalter S1, S3, S5 und einen zweiten bidirektionalen Stromrichterventilschalter S2, S4, S6 auf, wobei jeder bidirektionale Stromrichterventilschalter S1 bis S6 einen ersten Anschluss und einen zweiten Anschluss hat.
- In jedem Zweig sind der zweite Anschluss der ersten bidirektionalen Stromrichterventilschalter S1, S3, S5 und der erste Anschluss der zweiten bidirektionalen Stromrichterventilschalter S2, S4, S6 in einem Mittelpunkt des Zweigs miteinander verbunden.
- Jeder Mittelpunkt eines Zweigs der Brückenschaltung ist mit genau einem Außenleiteranschluss uU, uV, uW des ersten Ein- und Ausgangs verbunden und umgekehrt.
- Die ersten Anschlüsse der ersten bidirektionalen Stromrichterventilschalters S1, S3, S5 der Zweige sind mit dem ersten Anschluss A des zweiten Ein- und Ausgangs des Direktumrichters D verbunden.
- Die zweiten Anschlüsse der zweiten bidirektionalen Stromrichterventilschalter S2, S4, S6 der Zweige sind mit einem zweiten Anschluss B der Einphasenwechselstromseite verbunden.
- Jeder bidirektionale Stromrichterventilschalter S1 bis S6 weist eine antiserielle Schaltung von Stromrichterventilen auf und die Stromrichterventile weisen eine in Rückwärtsrichtung leitende Diode auf oder es ist eine in Rückwärtsrichtung der Stromrichterventile leitende Freilaufdiode parallel zu jedem Stromrichterventil geschaltet.
- Die Steuerung steuert in einem Vorwärtsbetrieb des Direktumrichters D die Stromrichterventile so an, dass Strom zwischen den Stromrichterschaltungen kommutiert und der Direktumrichter als Frequenzumrichter arbeitet.
- Die Steuerung steuert in einem Rückwärtsbetrieb des Direktumrichters D die Stromrichterventile so an, dass Strom zwischen den Stromrichterschaltungen kommutiert und aus dem einphasigen mittelfrequenten Strom ein dreiphasiger Strom mit der Frequenz des Versorgungsnetzes geformt wird. Auch im Rückwärtsbetrieb arbeitet der Direktumrichter D als Frequenzumrichter.

Ein Neutralleiteranschluss ist in Fig. 1 nicht dargestellt. Da die Außenleiter symmetrisch belastet sind, ist ein Neutralleiteranschluss auch nicht notwendig.

Bei dem Beispiel aus Fig. 1 sind IGBTs als Stromrichterventile dargestellt. Es können aber auch andere steuerbare Halbleiterschalter als Stromrichterventile verwendet werden.

Der Ausgangsstrom, das heißt der Strom durch die Anschlüsse A, B des Direktumrichters ist mit iP bezeichnet. Der Strom hat eine Frequenz, die größer, insbesondere sehr viel größer ist als die Frequenz der Ströme auf der 3-Phasenwechselstromseite der Direktumrichter. Der Direktumrichter D arbeitet also als Frequenzumrichter.

Die Transformatorstufe wird durch einen Mittelfrequenztransformator T mit einem Übersetzungsverhältnis Np/Ns gebildet. Der Primärstrom des Transformators ist der Ausgangsstrom iP des Direktumrichters. Der Transformator dient insbesondere einer galvanischen Trennung des ersten Ein- und Ausgangs vom zweiten Ein- und Ausgang und umgekehrt. Er hat die Eingangsspannung uAB und eine Ausgangspannung uCD.

An die Transformatorstufe schließt sich als bidirektionaler Stromrichter B eine gesteuerte B2C-Brücke mit der Eingangsspannung uCD an. Die Eingangsspannung uCD entspricht der Sekundärspannung des Mittelfrequenztransformators T. Die Stromrichterventile sind normal sperrende n-Kanal MOS-FETs, an deren Stelle auch andere geeignete Stromrichterventile verwendet werden können.

An den Gleichstromeingang und -ausgang des bidirektionalen Stromrichters B ist eine Filterstufe aus einer Drossel Lf und einem Kondensator Cf in bekannter Tiefpassschaltung angeschlossen. Die B2C-Brücke und die Drossel Lf werden vom Strom iL durchflossen. Am Kondensator fällt die Spannung uC ab.

Parallel zu dem Kondensator Cf liegt der Gleichstromeingang und -ausgang des bidirektionalen Stromrichters B, an dem die Last angeschlossen ist und an dem die Spannung Udc abfällt, die der Kondensatorspannung uC entspricht. Der Laststrom ist mit iout bezeichnet.

Die nicht dargestellte Steuerung steuert den Direktumrichter D der Frequenzumrichterstufe so, dass diese im Vorwärtsbetrieb mittels Pulsweitenmodulation die einphasige Wechselspannung uAB formt oder im Rückwärtsbetrieb mittels der einphasigen Wechselspannung uAB elektrische Energie in das dreiphasige Versorgungsnetz einspeist. Die bidirektionalen Stromrichterventilschalter S1 bis S6 des Direktumrichters D werden dazu mit Schaltfrequenzen von bis zu einigen 10kHz betrieben.

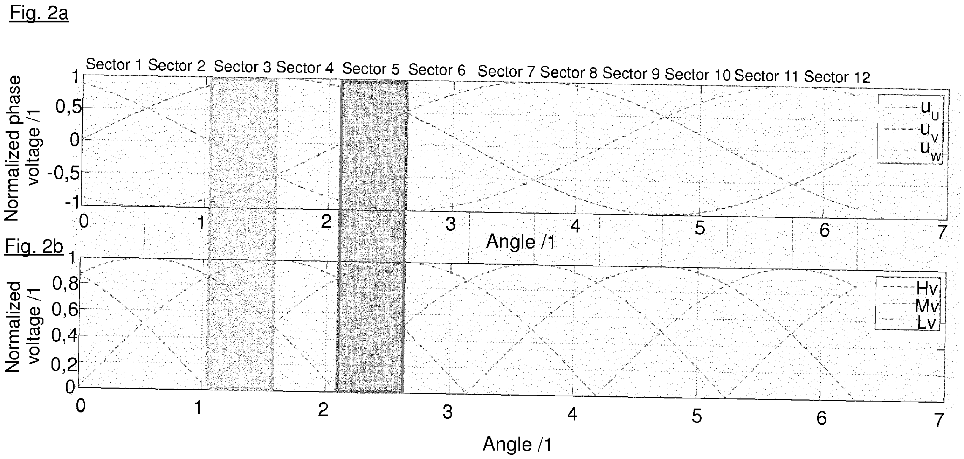

In Figur 2a sind die normierten Spannungen uU, uV, uW dargestellt. Der höchste Betrag Hv, der mittlere Betrag Mv und der niedrigste Betrag Lv der normalisierten Spannungen ist in der Figur 2b dargestellt.

In dem in den Figuren 2a und 2b mit Sektor 3 bezeichneten Bereich gilt beispielsweise für die Beträge Hv, Mv und Lv:
Hv = uU
Mv = -uV
Lv = -uW

Wie man in den Figuren 2a und 2b erkennen kann, hat im Sektor 3 die positive Spannung uU den größten Betrag. Die Beträge von uV und uW sind kleiner. Außerdem sind es negative Spannungen. Sektoren, in denen gilt, dass die betragsmäßig höchste Spannung positiv ist, werden im Folgenden mit PHVS bezeichnet (PVHS steht für *positive highest voltage sector*).

In dem in den Figuren 2a und 2b mit Sektor 5 bezeichneten Bereich gilt beispielsweise für die Beträge Hv, Mv und Lv:
Hv = -uW
Mv = uU
Lv = uV

Wie man in den Figuren 2a und 2b erkennen kann, hat die negative Spannung uU den größten Betrag. Die Beträge von uU und uV sind kleiner, die Absolutwerte aber größer und positiv. Sektoren, in denen gilt, dass die betragsmäßig höchste Spannung negativ ist, werden im Folgenden mit NHVS bezeichnet (NVHS steht für *negative highest voltage sector*).

Eine Periode der Spannungen uU, uV, uW lässt sich in 12 derartige Sektoren zu je 60° unterteilen. Der dritte Sektor wird im Vorwärtsbetrieb nachfolgend beispielhaft genauer betrachtet. Die dadurch gewonnenen Erkenntnisse können dann auf die anderen Sektoren übertragen werden.

Während aller Sektoren werden im Vorwärtsbetrieb des Direktumrichters D durch Ansteuerung der Stromrichterschaltungen S1t bis S6b Spannungen mit den Beträgen Hv, Mv und Lv auf den zweiten Ein- und Ausgang des Direktumrichters durchgeschaltet. Dadurch kann am zweiten Ein- und Ausgang des Direktumrichters die pulsförmige Spannung uAB erzeugt werden.

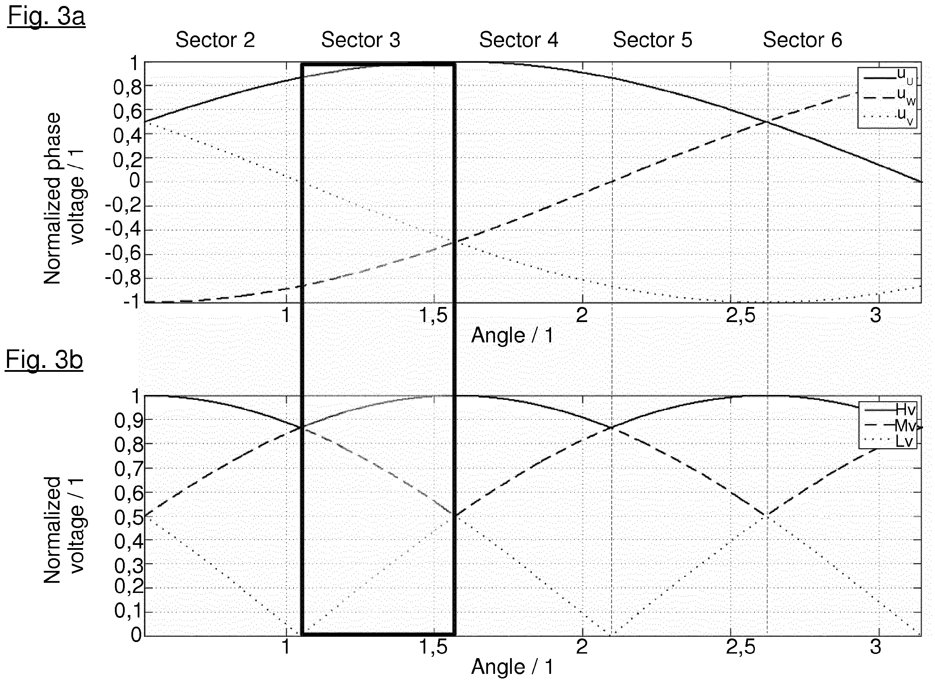

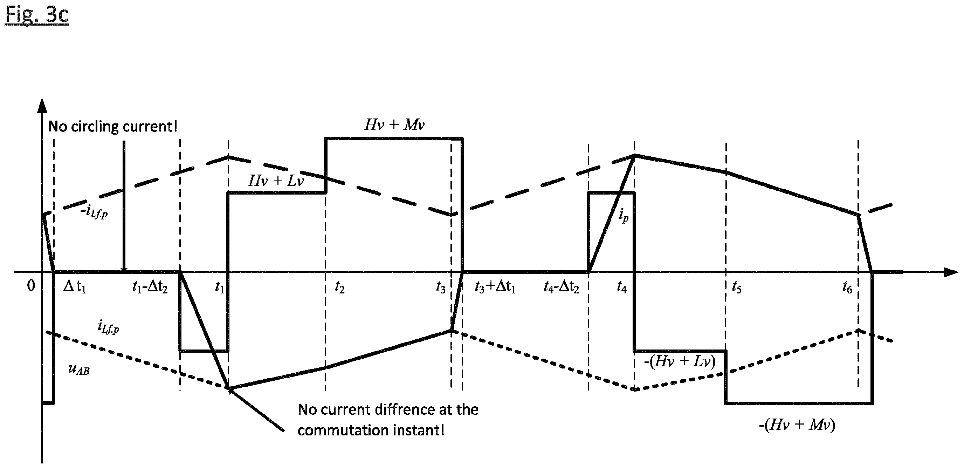

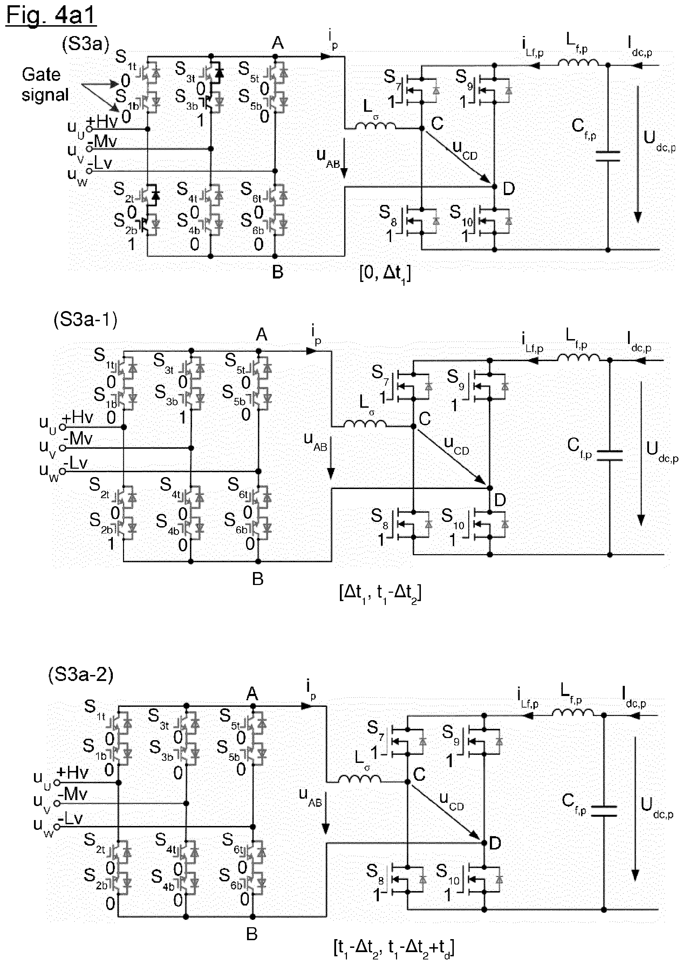

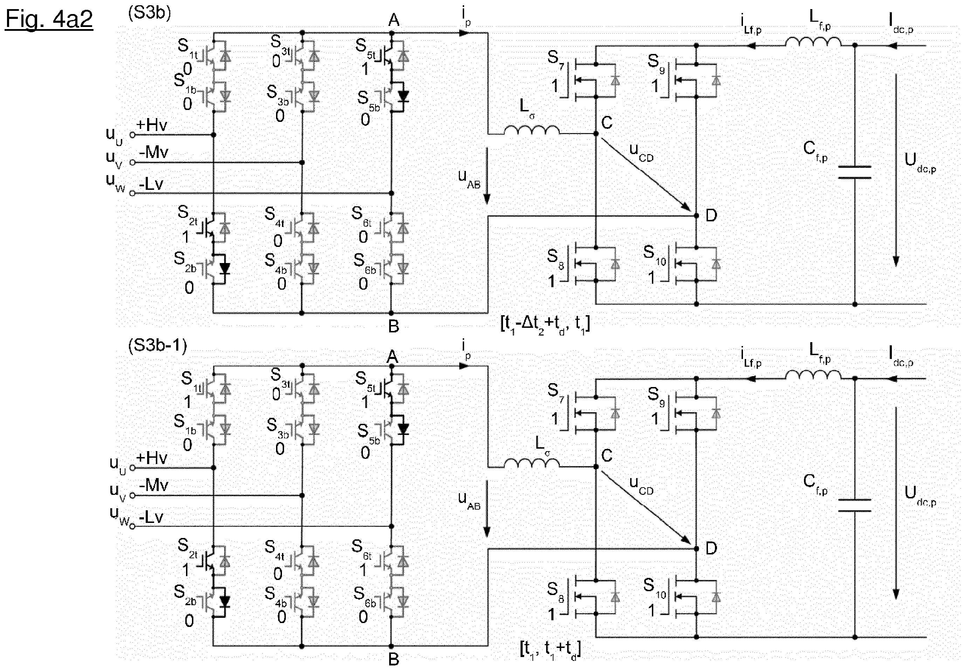

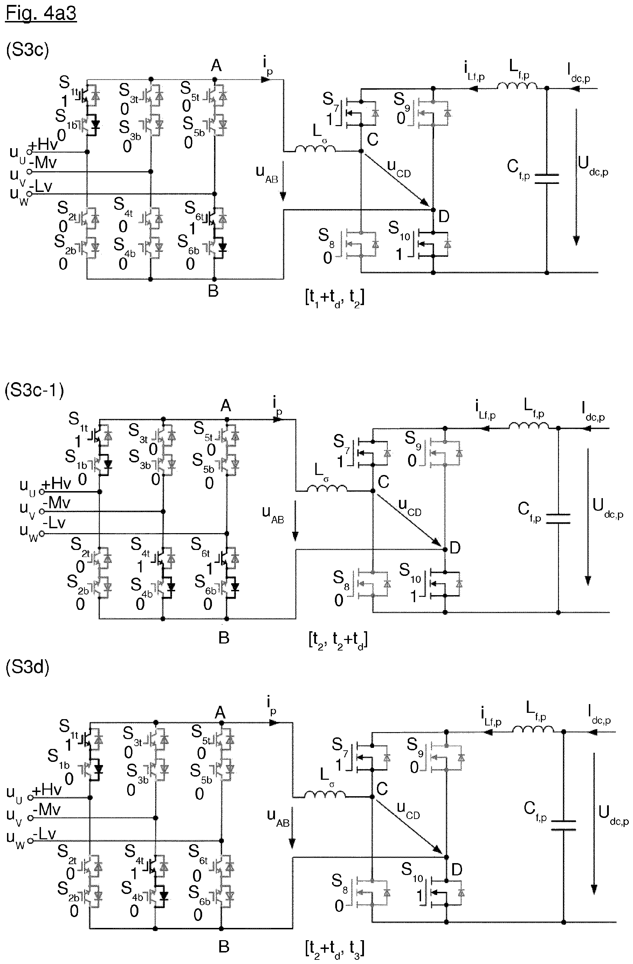

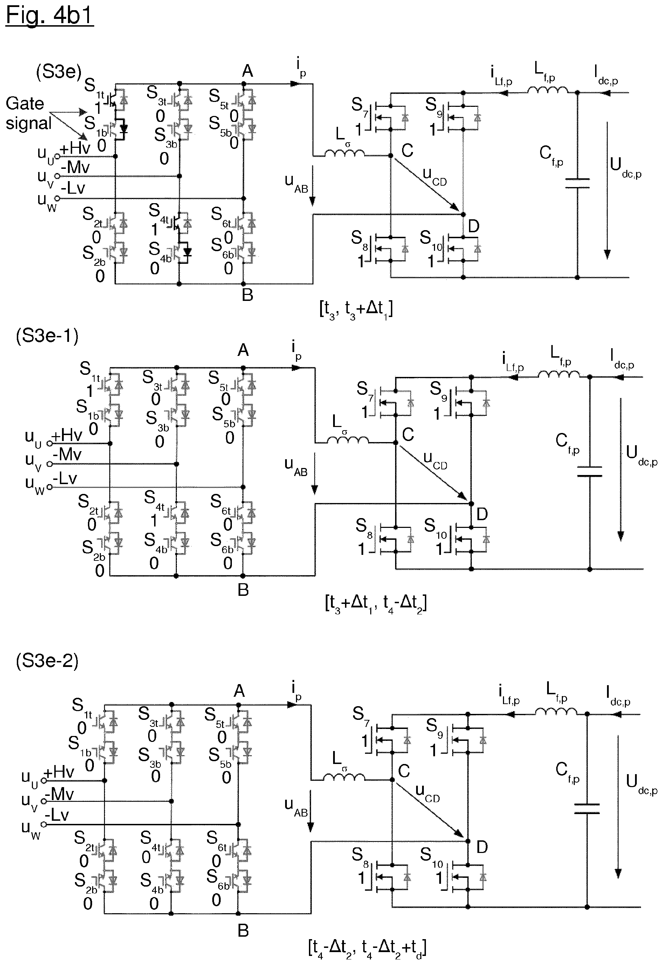

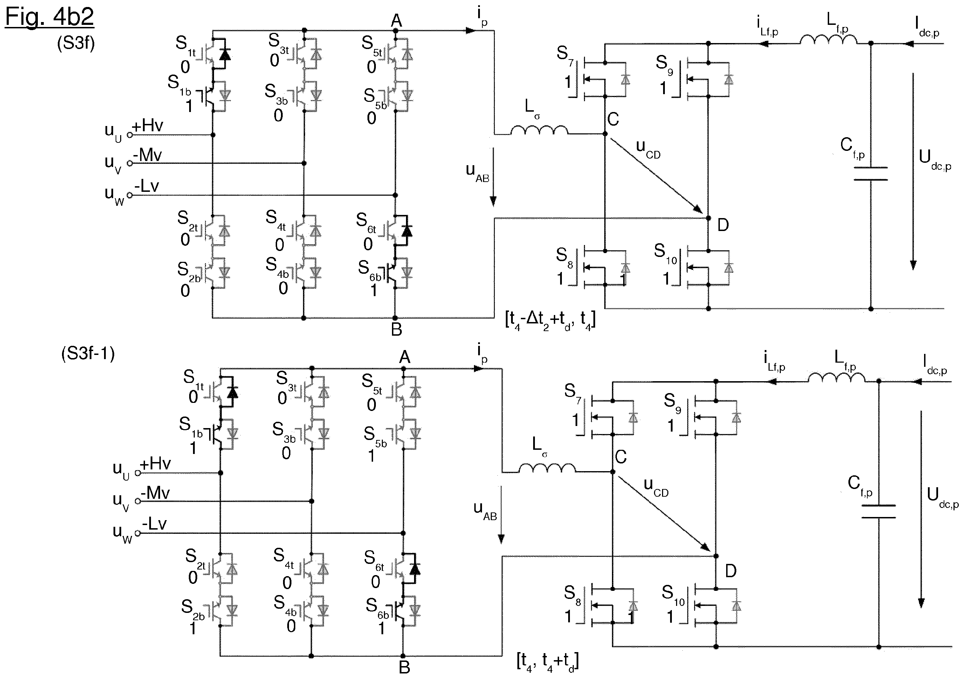

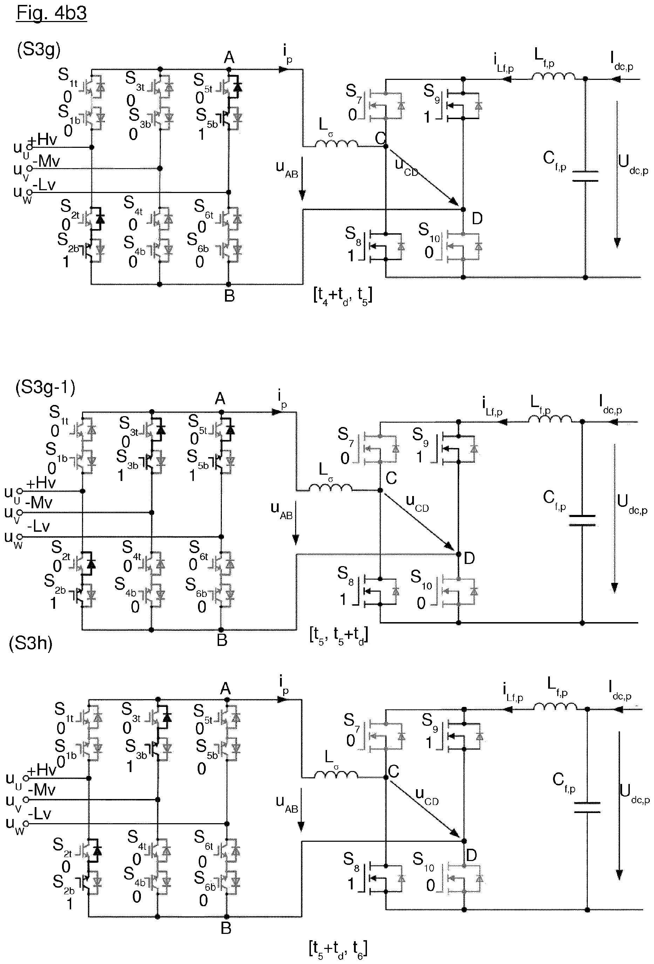

Im Weiteren werden nun die in der Fig. 3c als Beispiel dargestellten Spannungs- und Stromverläufe im Rückwärtsbetrieb über einer Periode der Spannung uAB am zweiten Ein- und Ausgang des Direktumrichters im Sektor 3 und die für die Erzeugung dieser Verläufe notwendigen Schaltvorgänge erläutert, die mittels der Steuerung der Stromrichterventilschalter S1t bis S6b des Direktumrichters und der Stromrichterventilschalter S7 bis S9 des bidirektionalen Stromrichters erfolgen. Dazu sind die in den Fig. 3c dargestellten Perioden der Spannung uAB in mehrere Intervalle [0, Δt1], [Δt1, t1-Δt2], [t1 -Δt2, t1], [t1, t2], [t2, t3], [t3, t3+Δt1], [t3+Δt1, t4-Δt2], [t4-Δt2, t4], [t4, t5], [t5, t6] unterteilt. In diesen Intervallen werden verschiedene Hauptschaltzustände S3a, S3a-1, S3b, S3c, S3c-1, S3e, S3e-1, S3f, S3g, S3g-1, S3h für den Sektor 3 eingenommen. Diese Schaltzustände sind in der Figur 4a, 4b für den Sektor 3 dargestellt.

Der Vorwärtsbetrieb ist zum Beispiel in der europäischen Patentanmeldung mit der Anmeldenummer 14 183 804.5 beschrieben.

Zwischen diesen Schaltzuständen S3a-1 und S3b, S3b und S3c, sowie S3c und S3d bzw. S3e-1 und S3f, S3f und S3g sowie S3g und S3h nehmen die Stromrichterventilschalter S1t bis S6b und S7 bis S9 Übergangsschaltzustände S3a-2, S3b-1, S3c-1 bzw. S3e-2, S3f-1, S3g-1 ein, die für eine sichere Kommutierung von Strömen von stromabgebenden Stromrichterventilschaltern zu stromübernehmenden Stromrichterschaltung notwendig sind. Diese Übergangsschaltzustände dauern nur sehr kurz. Die dafür notwendigen Zeiten werden, ohne dass sie für die verschiedenen Übergangsschaltzustände S3a-2, S3b-1, S3c-1 bzw. S3e-2, S3f-1, S3g-1 genauer differenziert werden, mit td bezeichnet.

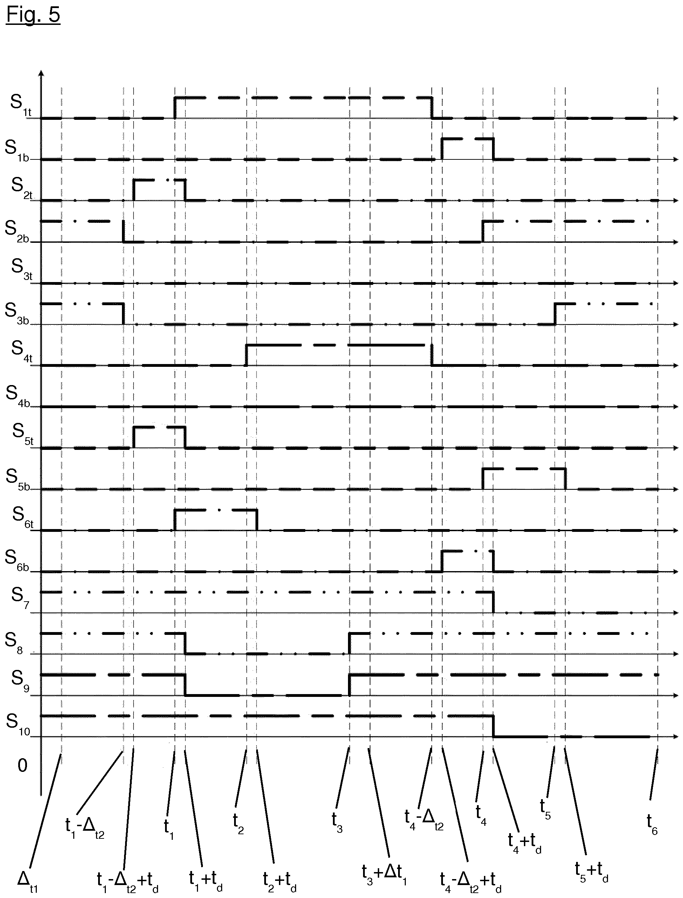

Die Zeitintervalle, in denen die S3a-2, S3b-1, S3c-1 bzw. S3e-2, S3f-1, S3g-1 eingenommen werden, sind in den Figuren 3c aus Gründen der Übersichtlichkeit nicht dargestellt. Die Übergangsschaltzustände S3a-2, S3b-1, S3c-1 bzw. S3e-2, S3f-1, S3g-1 sind aber in den Figuren 4a, 4b und in Fig. 5 dargestellt.

Die Übergangsschaltzustände S3a-2, S3e-2 zeichnen sich dadurch aus, dass die im Hauptschaltzustand stromführenden und stromabgebenden Stromrichterventilschalter S1t bis S6b bei Eintritt eines Überganszustands S3a-2, S3e-2 abgeschaltet werden. Die im nachfolgenden Hauptschaltzustand stromführende und damit stromübernehmende Stromrichterschaltung S1 bis S6 bleibt im Übergangszustand noch abgeschaltet. Diese stromübernehmende Stromrichterschaltung S1 bis S6 wird erst mit Eintritt des auf den Übergangszustand folgenden Hauptschaltzustands eingeschaltet, womit die Kommutierung abgeschlossen ist.

Im Hauptschaltzustand S3a sind die Stromrichterventilschalter S2b und S3b geschlossen, so dass die Spannung UAB am zweiten Ein- und Ausgang und an der Primärseite des Transformators T die verkettete Spannung zwischen den Außenleitern uU und uV abfällt, die im 3. Sektor der Summe -(Hv+Mv) entspricht. Gleichzeitig fließt ein Primärstrom iP, der von Induktivitäten im geschalteten Primärkreis getrieben wird. Strom und Spannung sind entgegengesetzt. Das bedeutet, dass Energie aus dem Primärkreis entnommen und in das Versorgungsnetz eingespeist wird. Dabei wird der Primärstrom abgebaut. Hat der Strom iP zum Zeitpunkt 0+Δt1 den Wert null erreicht, bleiben die Stromrichterventilschalter S2b und S3b angesteuert.

Im Hauptschaltzustand S3a sind außerdem alle Stromrichterventilschalter S7, S8, S9, S10 des bidirektionalen Stromrichters geschlossen. Dadurch ist die Sekundärseite des Transformators T kurzgeschlossen. Der Kondensator Cf und die Drossel Lf liegen dadurch parallel zu dem zweiten Ein- und Ausgang der Stromrichterschaltungsanordnung und werden von der am zweiten Ein- und Ausgang der Stromrichterschaltungsanordnung anliegenden Gleichspannung aufgeladen.

Nachdem zum Zeitpunkt 0+Δt1 der Strom iP den Wert null erreicht hat, geht die Schaltung in den mit S3a-1 bezeichneten Hauptschaltzustand über. In diesem Zustand, der bis zum Zeitpunkt t1-Δt2 dauert, fließt über die Stromrichterventilschalter S2b und S3b und den geschalteten Primärkreis kein Strom. Die verkettete Spannung zwischen den Außenleitern uU und uV kann wegen der Durchlassrichtung der Stromrichterventilschalter S2b und S3b keinen Strom durch den geschalteten Primärkreis treiben.

Während des Hauptschaltzustands S3a-1 bleiben die Stromrichterventilschalter S7, S8, S9, S10 des bidirektionalen Stromrichters geschlossen, so dass die Drossel Lf weiter aufgeladen wird.

Zum Zeitpunkt t1-Δt2 wird das Steuersignal der Stromrichterventilschalter S2b und S3b ausgeschaltet. Der Übergangszustand S3a-2 beginnt, der nur einen Zeitraum von td andauert und zum Zeitpunkt t1-Δt2+td endet. Der Übergangszustand S3a-2 wird durch Anlegen eines Steuersignals an die Steueranschlüsse der Stromrichterventilschalter S5t, S2t durch die Steuerung beendet.

Durch das Einschalten der Stromrichterventilschalter S5t, S2t wird der Hauptschaltzustand S3b eingeleitet und die verkettete Spannung -(Hv+Lv) an der Primärwicklung des Transformators angelegt. Die Streuinduktivität des Transformators und alle weiteren Streuinduktivitäten im geschalteten Primärkreis werden mit Strom aus dem am ersten Ein- und Ausgang der Stromrichterschaltungsanordnung angeschlossenen Versorgungsnetz aufgeladen. Der Strom iP im Primärkreis steigt an. Die Stromrichterventilschalter S7, S8, S9, S10 des bidirektionalen Stromrichters B bleiben geschlossen, so dass auch die Drossel Lf weiter aufgeladen wird. Der Primärstrom iP und der Strom iLf durch die Drossel Lf werden messtechnisch erfasst und unter Berücksichtigung des Übersetzungsverhältnisses des Transformators T miteinander verglichen. Dazu kann der Strom iLf durch die Drossel Lf zum Strom iLF,p transformiert werden.

Sind beide Ströme im Zeitpunkt t1 gleich groß, beginnt der Übergangsschaltzustand S3b-1 und die Stromrichterventilschalter S1t und S6t werden zusätzlich zu den Stromrichterventilschaltern S5t und S2t ebenfalls geschlossen. Die Primärseite des Transformators T wird dadurch kurzgeschlossen. Dieser Kurzschluss erfolgt für die Zeitdauer td, die der Übergangsschaltzustand S3b-1 anhält. Der Kurzschluss der Primärseite endet im Zeitpunkt t1+td, wenn durch die Steuerung die Stromrichterventilschalter S5t und S2t und auch die Stromrichterventilschalter S8 und S9 geöffnet werden und der Hauptschaltzustand S3c beginnt.

Durch die im Übergangsschaltzustand S3b-1 im Direktumrichter erfolgende Kommutierung wird die Spannungsrichtung an der Primärseite des Transformators T umgekehrt. Die Stromrichtung iP und die vom Versorgungsnetz vorgegebene Spannung uAB stehen einander entgegen. Die Primärwicklung des Transformators wirkt dadurch zu einer Stromquelle, die entgegen der Spannung uAB einen Strom iP in das Versorgungsnetz treibt. Der Primärstrom iP wird dabei durch einen Strom vorgegeben, der von der Drossel Lf getrieben wird, die sich über den Stromrichterventilschalter S7, die Sekundärwicklung des Transformators T und den Stromrichterventilschalter S10 entlädt und dabei den Strom iP in der Primärwicklung des Transformators T induziert.

Der Hauptschaltzustand S3c endet im Zeitpunkt t2, wenn im Übergangszustand S3c-1 eine weitere Kommutierung eingeleitet wird. Dazu wird im Zeitpunkt t2 der Stromrichterventilschalter S4t eingeschaltet, während die Stromrichterventilschalter S1t und S6t eingeschaltet bleiben.

Mit dem Beginn des folgenden Hauptschaltzustands S3d wird dann der Stromrichterventilschalter S6t abgeschaltet, so dass an der Primärseite die gegenüber der verketteten Spannung Hv+Lv höhere verkettete Spannung Hv+Mv als Spannung uAB anliegt. Dadurch wird die Entladung der Drossel Lf über den Transformator beschleunigt.

Der Hauptschaltzustand S3d endet im Zeitpunkt t3, wenn die Sekundärseite des Transformators durch ein Schließen der Stromrichterventilschalter S8 und S9 kurzgeschlossen werden. Im Zeitpunkt t3 beginnt der Hauptschaltzustand S3e.

Im Hauptschaltzustand S3e sind die Stromrichterventilschalter S1t und S4t geschlossen, so dass die Spannung UAB am zweiten Ein- und Ausgang und an der Primärseite des Transformators T die verkettete Spannung zwischen den Außenleitern uV und uU abfällt, die im 3. Sektor der Summe +(Hv+Mv) entspricht. Gleichzeitig fließt ein Primärstrom iP, der von Induktivitäten im geschalteten Primärkreis getrieben wird. Strom und Spannung sind entgegengesetzt. Das bedeutet, dass Energie aus dem Primärkreis entnommen und in das Versorgungsnetz eingespeist wird. Dabei wird der Betrag des Primärstroms abgebaut. Hat der Strom iP zum Zeitpunkt t3+Δt1 den Betrag null erreicht, bleiben die Stromrichterventilschalter S1t und S4t angesteuert.

Im Hauptschaltzustand S3e sind außerdem alle Stromrichterventilschalter S7, S8, S9, S10 des bidirektionalen Stromrichters geschlossen. Dadurch ist die Sekundärseite des Transformators T kurzgeschlossen. Der Kondensator Cf und die Drossel Lf liegen dadurch parallel zu dem zweiten Ein- und Ausgang der Stromrichterschaltungsanordnung und werden von der am zweiten Ein- und Ausgang der Stromrichterschaltungsanordnung anliegenden Gleichspannung aufgeladen.

Nachdem zum Zeitpunkt t3+Δt1 der Strom iP den Betrag Null erreicht hat, geht die Schaltung in den mit S3e-1 bezeichneten Hauptschaltzustand über. In diesem Zustand, der bis zum Zeitpunkt t4-Δt2 dauert, fließt über die Stromrichterventilschalter S1t und S4t und den geschalteten Primärkreis kein Strom. Die verkettete Spannung zwischen den Außenleitern uV und uU kann wegen der Durchlassrichtung der Stromrichterventilschalter S1t und S4t keinen Strom durch den geschalteten Primärkreis treiben.

Während des Hauptschaltzustands S3e-1 bleiben die Stromrichterventilschalter S7, S8, S9, S10 des bidirektionalen Stromrichters geschlossen, so dass die Drossel Lf weiter aufgeladen wird.

Zum Zeitpunkt t4-Δt2 wird das Steuersignal der Stromrichterventilschalter S1t und S4t ausgeschaltet. Der Übergangszustand S3e-2 beginnt, der nur einen Zeitraum von td andauert und zum Zeitpunkt t4-Δt2+td endet. Der Übergangszustand S3e-2 wird durch Anlegen eines Steuersignals an die Steueranschlüsse der Stromrichterventilschalter S1b, S6b durch die Steuerung beendet.

Durch das Einschalten der Stromrichterventilschalter S1b, S6b wird der Hauptschaltzustand S3f eingeleitet und die verkettete Spannung (Hv+Lv) an der Primärwicklung des Transformators angelegt. Die Streuinduktivität des Transformators und alle weiteren Streuinduktivitäten im geschalteten Primärkreis werden mit Strom aus dem am ersten Ein- und Ausgang der Stromrichterschaltungsanordnung angeschlossenen Versorgungsnetz aufgeladen. Der Strom iP im Primärkreis steigt an. Die Stromrichterventilschalter S7, S8, S9, S10 des bidirektionalen Stromrichters B bleiben geschlossen, so dass auch die Drossel Lf weiter aufgeladen wird. Der Primärstrom iP und der Strom iLf durch die Drossel Lf werden messtechnisch erfasst und unter Berücksichtigung des Übersetzungsverhältnisses des Transformators T miteinander verglichen. Dazu kann der Strom iLf durch die Drossel Lf zum Strom iLF,p transformiert werden.

Sind beide Ströme im Zeitpunkt t4 gleich groß, beginnt der Übergangsschaltzustand S3f-1 und die Stromrichterventilschalter S5b und S2b werden zusätzlich zu den Stromrichterventilschaltern S1b und S6b ebenfalls geschlossen. Die Primärseite des Transformators T wird dadurch kurzgeschlossen. Dieser Kurzschluss erfolgt für die Zeitdauer td, die der Übergangsschaltzustand S3f-1 anhält. Der Kurzschluss der Primärseite endet im Zeitpunkt t4+td, wenn durch die Steuerung die Stromrichterventilschalter S1b und S6b und auch die Stromrichterventilschalter S7 und S10 geöffnet werden und der Hauptschaltzustand S3g beginnt.

Durch die im Übergangsschaltzustand S3f-1 im Direktumrichter erfolgende Kommutierung wird die Spannungsrichtung an der Primärseite des Transformators T umgekehrt. Die Stromrichtung iP und die vom Versorgungsnetz vorgegebene Spannung uAB stehen einander entgegen. Die Primärwicklung des Transformators wirkt dadurch zu einer Stromquelle, die entgegen der Spannung uAB einen Strom iP in das Versorgungsnetz treibt. Der Primärstrom iP wird dabei durch einen Strom vorgegeben, der von der Drossel Lf getrieben wird, die sich über den Stromrichterventilschalter S9, die Sekundärwicklung des Transformators T und den Stromrichterventilschalter S8 entlädt und dabei den Strom iP in der Primärwicklung des Transformators T induziert.

Der Hauptschaltzustand S3g endet im Zeitpunkt t5, wenn im Übergangszustand S3g-1 eine weitere Kommutierung eingeleitet wird. Dazu wird im Zeitpunkt t5 der Stromrichterventilschalter S3b eingeschaltet, während die Stromrichterventilschalter S5b und S2b eingeschaltet bleiben.

Mit dem Beginn des folgenden Hauptschaltzustands S3h wird dann der Stromrichterventilschalter S5b abgeschaltet, so dass an der Primärseite die gegenüber der verketteten Spannung -(Hv+Lv) höhere verkettete Spannung -(Hv+Mv) als Spannung uAB anliegt. Dadurch wird die Entladung der Drossel Lf über den Transformator beschleunigt.

Der Hauptschaltzustand S3h endet im Zeitpunkt t6, wenn die Sekundärseite des Transformators durch ein Schließen der Stromrichterventilschalter S8 und S9 kurzgeschlossen wird. Im Zeitpunkt t6 beginnt der Hauptschaltzustand S3a der nächsten Periode.

## Patentansprüche

1. Stromrichterschaltungsanordnung mit Potentialtrennung,
- mit einem ersten Ein- und Ausgang (uU, uV, uW),
- mit einem zweiten Ein- und Ausgang (Udc) und
- mit einem bidirektionalen Stromrichter (B2C), mit einem Wechselstromeingang und -ausgang (UCD) und einem Gleichstromeingang und -ausgang,
- wobei der Gleichstromeingang und -ausgang des bidirektionalen Stromrichters mit dem zweiten Ein- und Ausgang (Udc) der Stromrichterschaltungsanordnung verbunden sind,
- mit einer Glättungsdrossel (Lf) in Reihe zum zweiten Ein- und Ausgang oder mit einem Glättungskondensator (Cf) parallel zum zweiten Ein- und Ausgang (Udc) und einer Glättungsdrossel (Lf) in Reihe zu der Parallelschaltung aus dem Glättungskondensator und dem zweiten Ein- und Ausgang (Udc),
- mit einem Direktumrichter (D),
- mit einem Transformator (T) und
- mit einem Stromsensor zum Erfassen eines Drosselstroms (iL) durch die Glättungsdrossel (Lf),
- wobei ein erster Ein- und Ausgang des Direktumrichters mit dem ersten Ein- und Ausgang (uU, uV, uW) der Stromrichterschaltungsanordnung verbunden ist,
- wobei ein zweiter Ein- und Ausgang des Direktumrichters (UAB) mit einer Primärseite des Transformators (T) verbunden ist,
- wobei eine Sekundärseite des Transformators (T) mit dem Wechselstromeingang und -ausgang (UCD) des bidirektionalen Stromrichters (B2C) verbunden ist,
- wobei die Stromrichterschaltungsanordnung einen Stromsensor zum Erfassen eines Primärstroms (iP) durch die Primärseite des Transformators aufweist und
**dadurch gekennzeichnet, dass**
- die Stromrichterschaltungsanordnung ein Mittel zum Vergleichen des Betrags des Primärstroms durch die Primärseite des Transformators und des Drosselstroms durch die Glättungsdrossel, beide Ströme rechnerisch transformiert auf eine der beiden Seiten des Transformators, aufweist,
und wobei die Stromrichterschaltungsanordnung dazu eingerichtet ist, von einem Laden der Glättungsdrossel (Lf) zu einem Entladen der Glättungsdrossel (Lf) zu wechseln, wenn der Strom durch die Glättungsdrossel (iL) und der Strom (iP) durch die Primärseite des Transformators (T), beide Ströme transformiert auf einer der beiden Seiten des Transformators (T), einen gleichen Betrag haben.

2. Stromrichterschaltungsanordnung nach Anspruch 1, **dadurch gekennzeichnet, dass** die Stromrichterschaltungsanordnung eine Steuerung aufweist, die das Mittel zum Vergleichen der Strombeträge umfasst oder mit dem Mittel zum Vergleichen der Strombeträge verbunden ist, so dass das Ergebnis des Vergleiches in die Steuerung einlesbar ist.

3. Stromrichterschaltungsanordnung nach Anspruch 2, **dadurch gekennzeichnet, dass** mit der Steuerung Schaltzeitpunkte ermittelbar sind, zu denen Stromrichterventile des Direktumrichters und des bidirektionalen Stromrichters leitend geschaltet oder ausgeschaltet werden.

4. Stromrichterschaltungsanordnung nach Anspruch 3, **dadurch gekennzeichnet, dass** mit der Steuerung Schaltvorgänge auslösbar sind, wenn das Mittel zum Vergleichen der Strombeträge für beide Ströme den gleichen Betrag feststellt, wobei die Schaltvorgänge in einem Wechselrichterbetrieb der Stromrichterschaltungsanordnung von einem Aufladen der Glättungsdrossel zu einem Entladen der Glättungsdrossel führen.

5. Stromrichterschaltungsanordnung nach einem der Ansprüche 1 bis 4, **dadurch gekennzeichnet, dass** der zweite Ein- und Ausgang (UAB) des Direktumrichters (D) in dem Brückenzweig der B6-Schaltung liegt.

6. Stromrichterschaltungsanordnung nach einem der Ansprüche 1 bis 5, **dadurch gekennzeichnet, dass** der bidirektionale Stromrichter (B2C) im Gleichrichterbetrieb und im Wechselrichterbetrieb betreibbar ist.

7. Stromrichterschaltungsanordnung nach einem der Ansprüche 1 bis 6, **dadurch gekennzeichnet, dass** der bidirektionale Stromrichter (B2C) durch eine B2C-Brückenschaltung aus Stromrichterventilen, zum Beispiel MOS-FETs oder IGBTs, gebildet ist.

8. Stromrichterschaltungsanordnung nach Anspruch 7, **dadurch gekennzeichnet, dass** der Gleichstromeingang und -ausgang des bidirektionale Stromrichters (B2C) in einem Brückenzweig der B2-Schaltung liegt.

9. Verfahren zum Betreiben einer Stromrichterschaltungsanordnung mit Potentialtrennung nach einem der Ansprüche 1 bis 5, **dadurch gekennzeichnet, dass** in die Stromrichterschaltungsanordnung
- bei einem Energietransport vom ersten Ein- und Ausgang (uU, uV, uW) der Stromrichterschaltungsanordnung zum zweiten Ein- und Ausgang der Stromrichterschaltungsanordnung (Udc) als Gleichrichter oder
- bei einem Energietransport vom zweiten Ein- und Ausgang (Udc) der Stromrichterschaltungsanordnung zum ersten Ein- und Ausgang (uU, uV, uW) der Stromrichterschaltungsanordnung als Wechselrichter
betreibbar ist,
wobei im Wechselrichterbetrieb die Glättungsdrossel (Lf) im Wechsel geladen und entladen wird und
wobei von einem Laden der Glättungsdrossel (Lf) zu einem Entladen der Glättungsdrossel (Lf) gewechselt wird, wenn der Strom durch die Glättungsdrossel (iL) und der Strom (iP) durch die Primärseite des Transformators (T), beide Ströme transformiert auf einer der beiden Seiten des Transformators (T), einen gleichen Betrag haben.

10. Verfahren nach Anspruch 9, **dadurch gekennzeichnet, dass** während des Ladens der Glättungsdrossel (Lf) der Brückenzweig des bidirektionalen Stromrichters (B2C) kurzgeschlossen ist.

11. Verfahren nach Anspruch 9 oder 10, **dadurch gekennzeichnet, dass** während des Entladens der Glättungsdrossel (Lf) ein erstes oder ein zweites Paar (S7, S10; S8, S9), nicht miteinander verbundener Stromrichterventile (S7 bis S10) des bidirektionale Stromrichters (B2C) leitend geschaltet sind und die Glättungsdrossel (Lf) einen Strom durch die leitend geschalteten Stromrichterventile und durch die Sekundärseite des Transformators (T) treibt.

12. Verfahren nach einem der Ansprüche 9 bis 11, **dadurch gekennzeichnet, dass** während des Ladens der Glättungsdrossel (Lf) der Strom durch die Primärseite des Transformators zunächst abgebaut wird und dann mit anderer Stromrichtung auf den Betrag des Stroms durch die Glättungsdrossel (Lf) gebracht wird.

13. Verfahren nach Anspruch 12, **dadurch gekennzeichnet, dass** während des Ladens der Glättungsdrossel (Lf) zum Einstellen des Stroms durch die Primärseite des Transformators (T) auf den Betrag des Stroms durch die Glättungsdrossel (Lf) durch leitend Schalten von Stromrichterventilschaltern des Direktumrichters (D) eine Spannung an die Primärseite angelegt wird, die die gleiche Richtung hat wie der gewünschte Strom durch die Primärseite des Transformators (T).

14. Verfahren nach einem der Ansprüche 9 bis 13, **dadurch gekennzeichnet, dass** während des Entladens der Glättungsdrossel (Lf) durch leitend Schalten von Stromrichterventilschaltern des Direktumrichters eine Spannung an die Primärseite angelegt wird, die die entgegengesetzte Richtung hat wie der Strom durch die Primärseite des Transformators (T).

## Claims

1. Power converter assembly with potential separation,
- having a first input and output (uU, uV, uW),
- having a second input and output (Udc) and
- having a bidirectional power converter (B2C), with an AC input and output (UCD) and a DC input and output
- wherein the DC input and output of the bidirectional power converter are connected to the second input and output (Udc) of the power converter assembly,
- having a smoothing reactor (Lf) in series with the second input and output or having a smoothing capacitor (Cf) parallel to the second input and output (Udc) and a smoothing reactor (Lf) in series with the parallel circuit from the smoothing capacitor and the second input and output (Udc),
- having a direct converter (D)
- having a transformer (T) and
- having a current sensor for detecting a reactor current (iL) through the smoothing reactor (Lf),
- wherein a first input and output of the direct converter is connected to the first input and output (uU, uV, uW) of the power converter assembly,
- wherein a second input and output of the direct converter (UAB) is connected to a primary side of the transformer (T),
- wherein a secondary side of the transformer (T) is connected to the AC input and output (UCD) of the bidirectional power converter (B2C),
- wherein the power converter assembly has a current sensor for detecting a primary current (iP) through the primary side of the transformer and
**characterised in that**
- the power converter assembly has a means for comparing the magnitude of the primary current through the primary side of the transformer and of the reactor current through the smoothing reactor, both currents arithmetically transformed on one of the two sides of the transformer,
and wherein the power converter assembly is configured to switch from charging the smoothing reactor (Lf) to discharging the smoothing reactor (Lf), when the current through the smoothing reactor (iL) and the current (iP) through the primary side of the transformer (T), both currents transformed on one of the two sides of the transformer (T), have an equal magnitude.

2. Power converter assembly according to claim 1, **characterised in that** the power converter assembly has a controller, which comprises the means for comparing the current magnitudes or is connected to the means for comparing the current magnitudes, so that the result of the comparison can be read into the controller.

3. Power converter assembly according to claim 2, **characterised in that** switching times can be determined with the controller, at which times power converter valves of the direct converter and the bidirectional power converter are conductively connected or disconnected.

4. Power converter assembly according to claim 3, **characterised in that** switching operations can be triggered with the controller if the means for comparing the current magnitudes determines the same magnitude for both currents, wherein the switching operations in an inverter mode of the power converter assembly lead from charging the smoothing reactor to discharging the smoothing reactor.

5. Power converter assembly according to any one of claims 1 to 4, **characterised in that** the second input and output (UAB) of the direct converter (D) lies in the bridge branch of the B6 circuit.

6. Power converter assembly according to any one of claims 1 to 5, **characterised in that** the bidirectional power converter (B2C) can be operated in rectifier mode and in inverter mode.

7. Power converter assembly according to any one of claims 1 to 6, **characterised in that** the bidirectional converter (B2C) is formed by a B2C bridge circuit comprising power converter valves, for example MOS-FETs or IGBTs.

8. Power converter assembly according to claim 7, **characterised in that** the DC input and output of the bidirectional power converter (B2C) is located in a bridge branch of the B2 circuit.

9. Method for operating a power converter assembly with potential separation according to any one of claims 1 to 5, **characterised in that** the power converter assembly can be operated
- as a rectifier in the case of energy transport from the first input and output (uU, uV, uW) of the power converter assembly to the second input and output of the power converter assembly (Udc) or
- as an inverter in the case of energy transport from the second input and output (Udc) of the power converter assembly to the first input and output (uU, uV, uW) of the power converter assembly,
wherein the smoothing reactor (Lf) is alternately charged and discharged in the inverter mode and
wherein a switching from charging the smoothing reactor (Lf) to discharging the smoothing reactor (Lf) takes place, when the current through the smoothing reactor (iL) and the current (iP) through the primary side of the transformer (T), both currents transformed on one of the two sides of the transformer (T), have an equal magnitude.

10. Method according to claim 9, **characterised in that** the bridge branch of the bidirectional power converter (B2C) is short-circuited during the charging of the smoothing reactor (Lf).

11. Method according to claim 9 or 10, **characterised in that** during the discharging of the smoothing reactor (Lf) a first or a second pair (S7, S10; S8, S9) of not interconnected power converter valves (S7 to S10) of the bidirectional power converter (B2C) are conductively connected and the smoothing reactor (Lf) drives a current through the conductively connected power converter valves and through the secondary side of the transformer (T).

12. Method according to any one of claims 9 to 11, **characterised in that** during the charging of the smoothing reactor (Lf), the current through the primary side of the transformer is first reduced and then brought to the magnitude of current through the smoothing reactor (Lf) with a different current direction.

13. Method according to claim 12, **characterised in that** during the charging of the smoothing reactor (Lf) for adjusting the current through the primary side of the transformer (T) to the magnitude of current through the smoothing reactor (Lf), by conductive switching of current converter valve switches of the direct converter (D), a voltage is applied to the primary side, which has the same direction as the desired current through the primary side of the transformer (T).

14. Method according to any one of claims 9 to 13, **characterised in that** during the discharging of the smoothing reactor (Lf), by conductive switching of the current converter valve switches of the direct converter, a voltage is applied to the primary side, which has the opposite direction to the current through the primary side of the transformer (T).

## Revendications

1. Circuit de convertisseur avec séparation de potentiel,
- avec une première entrée et sortie (uU, uV, uW),
- avec une seconde entrée et sortie (Udc) et
- avec un convertisseur bidirectionnel (B2C), avec une entrée et sortie de courant alternatif (UCD) et une entrée et sortie de courant continu,
- dans lequel l'entrée et sortie de courant continu du convertisseur bidirectionnel sont connectées à la seconde entrée et sortie (Udc) du circuit de convertisseur,
- avec une inductance de lissage (Lf) en série avec la seconde entrée et sortie, ou avec un condensateur de lissage (Cf) en parallèle avec la seconde entrée et sortie (Udc) et une inductance de lissage (Lf) en série avec le circuit parallèle du condensateur de lissage et de la seconde entrée et sortie (Udc),
- avec un convertisseur direct (D),
- avec un transformateur (T) et
- avec un capteur de courant pour détecter un courant d'inductance (iL) à travers l'inductance de lissage (Lf),
- dans lequel une première entrée et sortie du convertisseur direct est connectée à la première entrée et sortie (uU, uV, uW) du circuit de convertisseur,
- dans lequel une seconde entrée et sortie du convertisseur direct (UAB) est connectée à un côté primaire du transformateur (T),
- dans lequel un côté secondaire du transformateur (T) est connecté à l'entrée et sortie de courant alternatif (UCD) du convertisseur bidirectionnel (B2C),
- dans lequel le circuit de convertisseur présente un capteur de courant pour détecter un courant primaire (iP) à travers le côté primaire du transformateur et **caractérisé en ce que**
- le circuit de convertisseur présente un moyen pour comparer la quantité du courant primaire à travers le côté primaire du transformateur et le courant d'inductance à travers l'inductance de lissage, les deux courants étant transformés arithmétiquement sur l'un des deux côtés du transformateur, et dans lequel le circuit de convertisseur est configuré pour passer d'une charge de l'inductance de lissage (Lf) à une décharge de l'inductance de lissage (Lf) lorsque le courant à travers l'inductance de lissage (iL) et le courant (iP) à travers le côté primaire du transformateur (T), les deux courants étant transformés sur l'un des deux côtés du transformateur (T), ont une quantité égale.

2. Circuit de convertisseur selon la revendication 1, **caractérisé en ce que** le circuit de convertisseur présente une commande qui comprend le moyen de comparaison des quantités des quantités de courant ou qui est connectée au moyen de comparaison des quantités de courant de sorte que le résultat de la comparaison peut être lu dans la commande.

3. Circuit de convertisseur selon la revendication 2, **caractérisé en ce que** des moments de commutation peuvent être déterminés avec la commande, en fonction desquels des vannes de convertisseur du convertisseur direct et du convertisseur bidirectionnel sont activées ou désactivées.

4. Circuit de convertisseur selon la revendication 3, **caractérisé en ce que** des opérations de commutation peuvent être déclenchées avec la commande si le moyen de comparaison des quantités de courant détermine la même quantité pour les deux courants, dans lequel les opérations de commutation dans un mode convertisseur du circuit de convertisseur conduisent d'une charge de l'inductance de lissage à une décharge de l'inductance de lissage.

5. Circuit de convertisseur selon l'une quelconque des revendications 1 à 4, **caractérisé en ce que** la seconde entrée et sortie (UAB) du convertisseur direct (D) est située dans la branche de pont du circuit B6.

6. Circuit de convertisseur selon l'une quelconque des revendications 1 à 5, **caractérisé en ce que** le convertisseur bidirectionnel (B2C) peut fonctionner en mode redresseur et en mode convertisseur.

7. Circuit de convertisseur selon l'une quelconque des revendications 1 à 6, **caractérisé en ce que** le convertisseur bidirectionnel (B2C) est formé par un montage en pont B2C de vannes de convertisseur, par exemple des MOS-FET ou des IGBT.

8. Circuit de convertisseur selon la revendication 7, **caractérisé en ce que** l'entrée et sortie en courant continu du convertisseur bidirectionnel (B2C) est située dans une branche de pont du circuit B2.

9. Procédé de fonctionnement d'un circuit de convertisseur avec séparation de potentiel selon l'une quelconque des revendications 1 à 5, **caractérisé en ce que** le circuit de convertisseur peut fonctionner
- en tant que redresseur dans le cas d'un transport d'énergie de la première entrée et sortie (uU, uV, uW) du circuit de convertisseur vers la seconde entrée et sortie du circuit de convertisseur (Udc) ou
- en tant que convertisseur dans le cas d'un transport d'énergie de la seconde entrée et sortie (Udc) du circuit de convertisseur vers la première entrée et sortie (uU, uV, uW) du circuit de convertisseur,
dans lequel, en mode convertisseur, l'inductance de lissage (Lf) est chargée et déchargée alternativement et
dans lequel un passage d'une charge de l'inductance de lissage (Lf) à une décharge de l'inductance de lissage (Lf) est effectué lorsque le courant à travers l'inductance de lissage (iL) et le courant (iP) à travers le côté primaire du transformateur (T), les deux courants étant transformés sur l'un des deux côtés du transformateur (T), ont une quantité égale.

10. Procédé selon la revendication 9, **caractérisé en ce que** pendant la charge de l'inductance de lissage (Lf), la branche de pont du convertisseur bidirectionnel (B2C) est court-circuitée.

11. Procédé selon la revendication 9 ou 10, **caractérisé en ce que** pendant la décharge de l'inductance de lissage (Lf), une première ou une seconde paire (S7, S10 ; S8, S9) de vannes de convertisseur (S7 à S10) non connectées entre elles du convertisseur bidirectionnel (B2C) sont rendues conductrices et l'inductance de lissage (Lf) conduit un courant à travers les vannes de convertisseur rendues conductrices et à travers le côté secondaire du transformateur (T).

12. Procédé selon l'une quelconque des revendications 9 à 11, **caractérisé en ce que** pendant la charge de l'inductance de lissage (Lf), le courant est d'abord réduit par le côté primaire du transformateur puis amené à la quantité du courant traversant l'inductance de lissage (Lf) avec une direction de courant différente.

13. Procédé selon la revendication 12, **caractérisé en ce que** pendant la charge de l'inductance de lissage (Lf) pour ajuster le courant à travers le côté primaire du transformateur (T) à la quantité de courant à travers l'inductance de lissage (Lf), une tension est appliquée au côté primaire en rendant conducteurs les commutateurs de vanne de convertisseur du convertisseur direct (D), qui a la même direction que le courant souhaité à travers le côté primaire du transformateur (T).

14. Procédé selon l'une quelconque des revendications 9 à 13, **caractérisé en ce que** pendant la décharge de l'inductance de lissage (Lf), une tension est appliquée au côté primaire en rendant conducteurs les commutateurs de vanne de convertisseur du convertisseur direct, qui est dans la direction opposée au courant traversant le côté primaire du transformateur (T).
